(19) Europäisches Patentamt
European Patent Office
Office européen des brevets

(11) EP 1 182 588 A2

(12) EUROPEAN PATENT APPLICATION

(43) Date of publication:
27.02.2002 Bulletin 2002/09

(51) Int Cl.7: G06F 17/30

(21) Application number: 01300750.5

(22) Date of filing: 29.01.2001

(84) Designated Contracting States:
AT BE CH CY DE DK ES FI FR GB GR IE IT LI LU MC NL PT SE TR
Designated Extension States:
AL LT LV MK RO SI

(30) Priority: 21.08.2000 US 226586 P
06.10.2000 KR 2000058759

(71) Applicants:
- SAMSUNG ELECTRONICS CO., LTD.
Suweon-city, Kyungki-do (KR)
- THE REGENTS OF THE UNIVERSITY OF CALIFORNIA
Oakland, California 94607-5200 (US)

(72) Inventors:
- Choi, Yang-lim
Paldal-gu, Suwon-city,Kyungki-do, (KR)
- Manjunath, S.Bangalore
Santa Barbara,Calif.93106-9560 (US)
- Wu, Peng
Santa Barbara,Calif.93106-9560 (US)

(74) Representative: Geary, Stuart Lloyd et al
Venner, Shipley & Co., 20 Little Britain
London EC1A 7DH (GB)

(54) **Signal indexing**

(57) Signals are indexed by a modified form of vector approximation files. Before being approximated, the dimensions of the vectors are quantized according a law depending on the distribution of values in the input data set. It is these quantized values that are then approximated.

**FIG. 1**

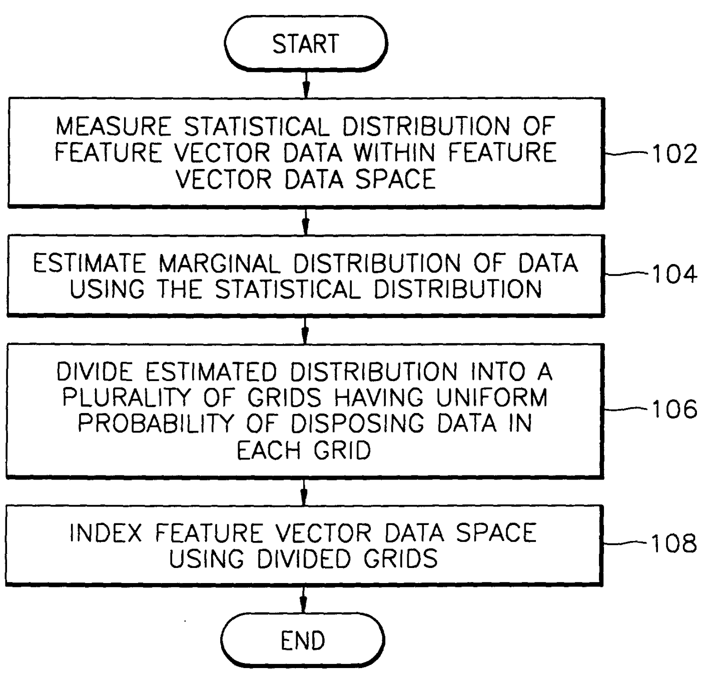


EP 1 182 588 A2

## Description

The present invention relates to a method of processing a plurality of time and/or spatially varying signals, the method comprising determining a feature vector for each signal, generating a signature for each feature vector, said signatures approximating respective feature vectors and being coarser than said vectors, storing said signatures so as to provide an index to the signals to which they relate.

The high dimensionality of typical multimedia data descriptors poses challenging problems in designing effective indexing schemes. Therefore, recently several new indexing structures have been proposed. One of the common assumption made is that the feature vectors are uniformly distributed within a vector space. However, many media descriptors such as image texture descriptors are not uniformly distributed. For example, in the case of a method for using well-known vector approximation (VA) files, which are coarser grained than the feature vectors themselves, the performance of the method depends on the uniform distribution of the feature vectors, and generally the method has the problem that its performance abruptly drops when indexing the feature vector data within vector space having high-dimensionality, in which the feature vectors are not uniformly distributed.

A method according to the present invention is characterised in that said feature vectors are quantized according to a quantization law depending on the distribution of their values for producing said signatures. Each dimension of the feature vectors may be quantized independently in dependence on the distribution of values for that dimension.

Preferably, the method is adaptive and includes generating a new quantization law in dependence on said feature vectors and an additional feature vector for a further time and/or spatially varying signal.

Preferably, each quantization step represents a range of values that is substantially as probable for a feature vector as are the ranges of the others.

Preferably, said quantization law is derived from the feature vector distribution for a first set of signals and signatures are produced using said quantization law for a second set of signals, the second set being a super set of said first set.

Preferably, said distribution is a sum of a plurality of Gaussian distributions approximating the actual distribution of said feature vectors.

An embodiment of the present invention will now be described, by way of example, with reference to the accompanying drawings, in which:-

Figure 1 is a flowchart showing the main steps of an indexing method according to the present invention;
Figure 2 illustrates the case where data joint distribution is still not uniform but agglomerated even though the marginal distribution of the data is uniform in each dimension;
Figure 3A is a histogram showing the distribution of feature vector data within the feature vector data space;
Figure 3B is a graph showing the probability distribution function estimate on the histogram;
Figure 4A is a graph showing feature vector values of the data sets;
Figure 4B is a graph showing the results of calculating a histogram of the data sets of Figure 4A;
Figures 4C, 4D, and 4E are graphs showing the estimated probability distribution functions when the number of elements used for the estimation is 1700, 3400, and 5000, respectively; and
Figures 5A and 5B are graphs showing the comparison of the number of feature vectors visited in first and second filtering steps, using a conventional indexing method and an indexing method of the present invention.

According to the present invention, vector approximation (VA) files are formed adaptively on the basis of statistical distributions of feature vector data within the feature vector data space. That is, since densely distributed cells can deteriorate the performance of indexing, the approximation of the feature vectors is formed adaptively according to statistical features of the data in the present invention.

Referring to Figure 1, in an indexing method according to the present invention, statistical distributions of the feature vector data are measured within the feature vector data space (step 102). Then, marginal distribution is estimated using the statistical distribution (step 104). Next, estimated marginal distributions are divided into a plurality of grids in which a probability of disposing the data in each grid becomes uniform (step 106). The number of grids is determined by the number of bits assigned to the dimension. Then, the feature vector data space is indexed using the divided grids (step 108). The step 108 can be performed on the basis of the indexing method using well known vector approximation (VA) files.

The approximation formed by the above method reduces the possibility of having densely distributed cells. Therefore, the performance of indexing is enhanced.

The fact that the marginal distributions of the data can only capture partial information of high dimensional distributions should be noted. Figure 2 illustrates the case that the data joint distribution is still not uniform but agglomerated even though the marginal distributions of the data are uniform in each dimension. With reference to Figure 2, the marginal distributions of the data are uniform in each dimension within the entire feature vector data space 20.

However, if it is considered that a correlation of data is reduced in different dimensions as the properties of the dimensionality, and image/video database increase, it can still be an effective method to estimate the marginal distributions of the data by capturing the statistical properties of the high dimensional data.

Hereinafter, methods of realizing a method of the present invention will be described in greater detail. First, a probability distribution function of data in *i*-dimension is denoted by $p_i(x)$. By assuming that data of each dimension are independent of each other, the algorithm described hereinafter can be independently applied to each dimension. Also, as described, the uniformity of the data distribution actually has an irregular probability distribution function of data or is not modeled by a well-defined function such as the Gaussian function. In the present invention, a probability distribution function of one-dimensional data is modeled using the Gaussian mixture function in order to endure a change of the data distribution.

First, it is assumed that a probability distribution function of a one-dimensional signal, $p(x)$ is defined as follows:

$$p(x)=\sum_{j=1}^{N}p(x\mid j)P(j) \qquad (1)$$

Here, $p(x|j)$ is defined as follows:

$$p(x\mid j)=\frac{1}{\sqrt{2\pi\sigma_j^2}}\exp\left\{-\frac{(x-\mu_j)^2}{2\sigma_j^2}\right\} \qquad (2)$$

The coefficients $P(j)$ are called the mixing parameter and satisfy the criterion $0 \le P(j) \le 1$ and the following formula.

$$\sum_{j=1}^{M}P(j)=1 \qquad (3)$$

Thus, in this embodiment, the probability distribution function is defined using a weighted sum of the Gaussain function. Then, the task of estimating probability distribution functions is then converted to be a problem of parameter estimation. Here, when the parameters which must be estimated are $j$=1,...,$M$, and $l$=1,...,$N$, and $v[l]$ is an assigned data set, $\Phi_j$, which maximizes the following formula, is obtained.

$$\Phi(\Phi_1,\ldots,\Phi_M)=\prod_{l-0}^{N}p(v[l]\mid(\Phi_1,\ldots,\Phi_M)) \qquad (4)$$

Parameters are obtained using an expectation-maximization (EM) algorithm. According to the algorithm, N predetermined data are used as an input for the estimation, and parameters are estimated iteratively using all of the N assigned data in each iteration.

Let $t$ denote the iteration number, the following equations are used to update the estimated parameters.

$$\mu_j^{t+1}=\frac{\sum_{l=1}^{N}p(j\mid v[l])^t v[l]}{\sum_{l=1}^{n}p(j\mid v[l])^t} \qquad (5)$$

$$\left(\sigma_j^2\right)^{t1} = \frac{\sum_{j=1}^{N} p\left(j \mid v[l]\right)^t \left(v[l] - \mu_j^t\right)^2}{\sum_{j=1}^{N} p\left(j \mid v[l]\right)^t} \quad (6)$$

$$P(j)^{t+1} = \frac{1}{N} \sum_{j=1}^{N} p\left(j \mid v[l]\right)^t \quad (7)$$

However, if the data's distribution has a singular value which can not be grouped with other values as a part of a Gaussian function, crash of estimation can be caused.

When this is the case, to capture this value accurately, we have to let a certain_ approach that value and let the corresponding $\sigma^2$ be converged to 0. To avoid this singularity problem, a very small value is set as a lower bound for an estimated variance.

In order to explain the efficiency of the use of the EM algorithm for estimating parameters of the Gaussian mixture function, a histogram illustrates a distribution of feature vector data within the feature vector data space in Figure 3A, and a graph of a probability distribution function estimated based on the histogram is illustrated in Figure 3B. As shown in Figure 3A, even though the data's distribution is irregular and cannot be modelled by some simple form function, using the Gaussian mixtures as the modelling tool and EM algorithm to estimate the parameters, the data's probability distribution function can be modelled well as shown in Figure 3B.

Parameters can be estimated for N predetermined data using the formulas 5, 6, and 7. In the case of a large database, N is generally only a small portion, compared with the total number of elements. In realistic database applications, an estimation of a prescribed point is required to be updated. For example, there can be a case where a larger portion of data is required to be used for a better estimation. Alternatively, when the database is non-static, statistical characteristics of data change, so that the probability distribution function must be re-estimated. In either cases, memories of the previous estimation are not required to be totally erased. In view of the parameter estimation, when a data set changes, a strategy should concentrate on tracking the change of the estimated probability distribution function. For this objective, an algorithm which can sequentially update the estimation is used.

When an estimated parameter set $\{P(j)^N, \mu_j^N, (\sigma_j^2)^N$ using N data *v[l]* is given, the updated parameter set, when new data *v[N+1]* coming in, can be calculated as follows.

$$\mu_j^{N+1} = \mu_j^N + \theta_j^{N+1}\left(v[N+1] - \mu_j^N\right) \quad (8)$$

$$\left(\sigma_j^2\right)^{N+1} = \left(\sigma_j^2\right)^N + \theta_j^{N+1}\left[\left(v[N+1] - \mu_j^N\right)^2 - \left(\sigma_j^2\right)^N\right] \quad (9)$$

$$P(j)^{N+1} = P(j)^N + \frac{1}{N+1}\left(P\left(j \mid v[N+1]\right) - P(j)^N\right) \quad (10)$$

In the formulas 8 and 9, relations are realized as follows.

$$(\theta_j^{N+1})^{-1} = \frac{P(j|v[N]}{P(j|v[N+1])}(\theta_j^N)^{-1} + 1$$

In order to evaluate the performance of tracking using an on-line estimation, experimentation is performed on synthetic data set. Feature vector values of data sets are illustrated in Figure 4A. Referring to Figure 4A, the data

sets include 5000 elements. In Figure 4B, the results of calculating histograms on the data sets of Figure 4A are illustrated. Each individual element is sequentially added up for the estimation. Then, parameters are calculated using formulas 8, 9, and 10. Next, when a certain number of elements are used for the estimation, a probability distribution function is formed from the estimated parameters.

In Figures 4C, 4D, and 4E, the probability distribution functions are illustrated when the number of elements used for the estimation is 1700, 3400, and 5000, respectively. Referring to Figures 4C, 4D, and 4E, when the distribution of input data changes, it can be shown that the on-line estimation tracks very well. Here, it is necessary to pay attention to the fact that efficiency of the on-line estimation partially depends on the method of choosing the data used as the input.

For example, when the probability distribution function of the data shown in Figure 4A is estimated, the data is chosen in the same order of indexing the data, and then, one estimated probability distribution function is obtained as shown in Figure 4E. That is, ideally, the data must be chosen so as not to place inappropriate emphasis on the data.

The estimated probability distribution function is called $\hat{p}(x)$. An objective of a nonlinear quantization is to divide the probability distribution function using a plurality of grids to make areas covered by each grid the same. If boundary points are indicated as *c[l]*, the boundary points must satisfy the following criterion.

$$\int_{c[l]}^{c[l+1]} \hat{p}(x)dx = \frac{1}{2^b} \int_{c[0]}^{c[2^b]} \hat{p}(x)dx \qquad (12)$$

It is possible to determine boundary points from one pass scan of a probability distribution function estimated using the criterion. For example, all N points are agglomerated to $2^b$ clusters, so that boundary points of each dimension are determined in the formula 4. Also, not only boundary points can be found very effectively by calculation using the formula 12, but also dependency of distance measure can be avoided.

According to the above method, a probability distribution function is able to be updated. This feature is very important for keeping satisfied indexing for the irregular database. That is, every time when previous estimation doesn't fit with the updated estimation, the approximation needs to be updated. For this reason, a measure is required to decide when to update the approximation based on the change of probability distribution function estimation. Also, thanks to the parallel scheme of utilizing the probability distribution function to construct the approximation, the measure for updating the approximation can be defined in each dimension. When the previous probability distribution function is $\hat{P}_{old}(x)$, and the updated probability distribution function is $\hat{P}_{new}(x)$, a measurement of changes in the probability distribution functions can be defined as follows.

$$\rho = \frac{\int \left(\hat{P}_{old}(x) - \hat{P}_{new}(x)\right)^2 dx}{\int \hat{P}_{old}(x)^2 dx} \qquad (13)$$

Here, when ρ is bigger than a predetermined threshold value, an approximation of its dimension is updated.

The process of evaluating an image database including 34,698 aerial photograph images, according to the present invention and, by way of contrast, according to a prior art method, will now be described. First, 48-dimensional feature vectors describing texture characteristics of each of the images were extracted using a conventional method for extracting texture feature vectors. A probability distribution function was estimated from an entire data set on the basis of the extracted feature vectors. Figures 5A and 5B are graphs illustrating comparison of the number of feature vectors which are visited in the first step filtering and the second step filtering using the conventional indexing method and the indexing method of the present invention. In Figure 5A, a plot 502 shows the number of feature vectors visited in the first filtering step using an indexing method of the present invention which adaptively forms VA files, and a plot 504 shows the number of feature vectors visited in the first step filtering using the conventional indexing method which uses fixed VA files. Also, the number of feature vectors visited in the first step filtering is indicated by the vertical axis N1.

Also, in Figure 5B, a plot 512 shows the number of feature vectors visited in the second filtering step using an indexing method of the present invention which adaptively forms VA files, and a plot 514 shows the number of feature vectors visited in the second step filtering using the conventional indexing method which uses fixed VA files. Also, the number of feature vectors visited in the second step filtering is indicated by the vertical axis N2. Comparing the plots 502 and 504 with the plots 512 and 514, the number of feature vectors, visited in the first step filtering and the second step filtering using the indexing method of the present invention which adaptively forms VA files, is much bigger than the number of feature vectors, visited in the first step filtering and the second step filtering using the conventional indexing method which uses fixed VA files.

The present invention may be embodied in a database system for signals, e.g. image or audio representing signals such as may be obtained by sensing the physical world. In such a system, a dataset comprising a plurality of signals is processed according to the present invention to produce an index. The database can then be queried by inputting a sample signal, which is processed to derive indexing values using the feature vector quantization used for generating the database index. These indexing values are then compared with the values in the index to find signals having similar characteristics.

The indexing method of the present invention can be written as a program which is performed in a personal computer or a server computer. Program codes and code segments which form the program can be easily derived by computer programmers in the art. Also, the program can be stored on computer readable recording media. Such recording media includes magnetic recording media, optical recording media. Additionally, the program codes may be conveyed in the form of electric or electromagnetic signals.

## Claims

1. A method of processing a plurality of time and/or spatially varying signals, the method comprising determining a feature vector for each signal, generating a signature for each feature vector, said signatures approximating respective feature vectors and being coarser than said vectors, storing said signatures so as to provide an index to the signals to which they relate, **characterised in that** said feature vectors are quantized according to a quantization law depending on the distribution of their values for producing said signatures.

2. A method according to claim 1, including generating a new quantization law in dependence on said feature vectors and an additional feature vector for a further time and/or spatially varying signal.

3. A method according to claim 1 or 2, wherein each quantization step represents a range of values that is substantially as probable for a feature vector as are the ranges of the others.

4. A method according to claim 1, 2 or 3, wherein said quantization law is derived from the feature vector distribution for a first set of signals and signatures are produced using said quantization law for a second set of signals, the second set being a super set of said first set.

5. A method according to any preceding claim, wherein said distribution is a sum of a plurality of Gaussian distributions approximating the actual distribution of said feature vectors.

6. A method for indexing feature vector data space comprising the step of:

   (a) indexing feature vector data space by adaptively approximating feature vectors on the basis of statistical distribution of feature vector data in the feature vector data space.

7. The method of claim 6, wherein the step (a) comprises:

   (a-1) measuring the statistical distribution of the feature vector data in the feature vector data space;
   (a-2) estimating marginal distribution of the data using the statistical distribution;
   (a-3) dividing the estimated marginal distribution into a plurality of grids in which a distribution of disposing the data in each grid becomes uniform; and
   (a-4) indexing the feature vector data space using the divided grids.

8. The method of claim 7, before the step (a-4), further comprising the step of updating the grids on the basis of the previous probability distribution function and the updated probability distribution function when new data enters.

9. The method of claim 7, wherein the step (a-4) comprises indexing using vector approximation (VA) files.

10. The method of claim 7, wherein the number of the plurality of grids is determined by the number of bits assigned to the dimension.

11. The method of claim 7, wherein the step (a-2) comprises:

   (a-2-1) defining a probability distribution function using a weighted sum of the predetermined distribution function; and
(a-2-2) obtaining an estimated probability distribution function by estimating predetermined parameters using the probability distribution function defined in the step (a-2-1).

**12.** The method of claim 11, wherein the step (a-2-2) comprises obtaining an estimated probability distribution function by estimating predetermined parameters using all N predetermined data every time, wherein N is a positive integer, on the basis of expectation-maximization algorithm using the probability distribution function defined in the step (a-2-1).

**13.** The method of claim 11, wherein the predetermined distribution function is the Gaussian function.

**14.** The method of claim 11, wherein the step (a-2-1) comprises: assuming that a probability distribution function of the one-dimensional signal, *p(x)*, is

$$p(x) = \sum_{j=1}^{N} p(x \mid j) P(j),$$

wherein $p(x|j)$ is defined as

$$p(x \mid j) = \frac{1}{\sqrt{2\pi\sigma_j^2}} \exp\left\{ -\frac{(x-\mu_j)^2}{2\sigma_j^2} \right\},$$

and mixing parameter *P(j)* satisfies the criterions that $0 \leq P(j) \leq 1$ and $\sum_{j=1}^{M} P(j) = 1$, a probability distribution function of a one-dimensional signal.

**15.** The method of claim 11, wherein the step (a-2-2) comprises: obtaining an estimated probability distribution function by finding $\Phi_j$ which maximizes $\Phi(\Phi_1,...,\Phi_M)=\prod_{l=0}^{N} p(v[l]|(\Phi_1,...,\Phi_M))$, wherein parameters to be estimated are $j$=1,..., $M$, and $l$=1,...,$N$, and v[l] is a given data set.

**16.** The method of claim 15, wherein the step (a-2-2) further comprises a step of obtaining estimated parameters according to

$$\mu_j^{t+1} = \frac{\sum_{l=1}^{N} p(j \mid v[l])^t \, v[l]}{\sum_{l=1}^{n} p(j \mid v[l])^t},$$

$$(\sigma_j^2)^{t1} = \frac{\sum_{j=1}^{N} p(j \mid v[l])^t (v[l] - \mu_j^t)^2}{\sum_{j=1}^{N} p(j \mid v[l])^t},$$

and

$$P(j)^{t+1} = \frac{1}{N}\sum_{j=1}^{N} p(j \mid v[l])^t ,$$

wherein t is a positive integer representing the number of iteration.

**17.** The method of claim 10, wherein the step (a-2-2) further comprises: if new data, v[N+ 1] enters finding a updated parameter set by calculating

$$\mu_j^{N+1} = \mu_j^N + \theta_j^{N+1}\left(v[N+1] - \mu_j^N\right), \left(\sigma_j^2\right)^{N+1} = \left(\sigma_j^2\right)^N + \theta_j^{N+1}\left[\left(v[N+1] - \mu_j^N\right)^2 - \left(\sigma_j^2\right)^N\right],$$

$$P(j)^{N+1} = P(j)^N + \frac{1}{N+1}\left(P(j \mid v[N+1]) - P(j)^N\right),$$

and

$$\left(\theta_j^{N+1}\right)^{-1} = \frac{P(j \mid v[N])}{P(j \mid v[N+1])}\left(\theta_j^N\right)^{-1} + 1$$

when a parameter set $\{P(j)^N, \mu_j^N, (\sigma_j^2)^N$, estimated using the N data, v[l], is given.

**18.** The method of claim 16, wherein the step (a-2-2) further comprises:

measuring a change of a probability distribution function which is defined as

$$\rho = \frac{\int\left(\hat{P}_{old}(x) - \hat{P}_{new}(x)\right)^2 dx}{\int \hat{P}_{old}(x)^2 dx}$$

for each dimension, wherein previous probability distribution function is $\hat{P}_{old}(x)$, and updated probability distribution function is $\hat{P}_{new}(x)$; and

updating approximation for the dimension if ρ is larger than a predetermined threshold value.

**19.** The method of claim 7, wherein the step (a-3) comprises: dividing the probability distribution function in order to make areas covered by each grid the same using a plurality of grids determined by boundary points, c[l], which satisfies a criterion,

$$\int_{c[l]}^{c[l+1]} \hat{p}(x)dx = \frac{1}{2^b}\int_{c[0]}^{c[2^b]} \hat{p}(x)dx ,$$

wherein the estimated probability distribution function is $\hat{p}(x)$.

FIG. 1

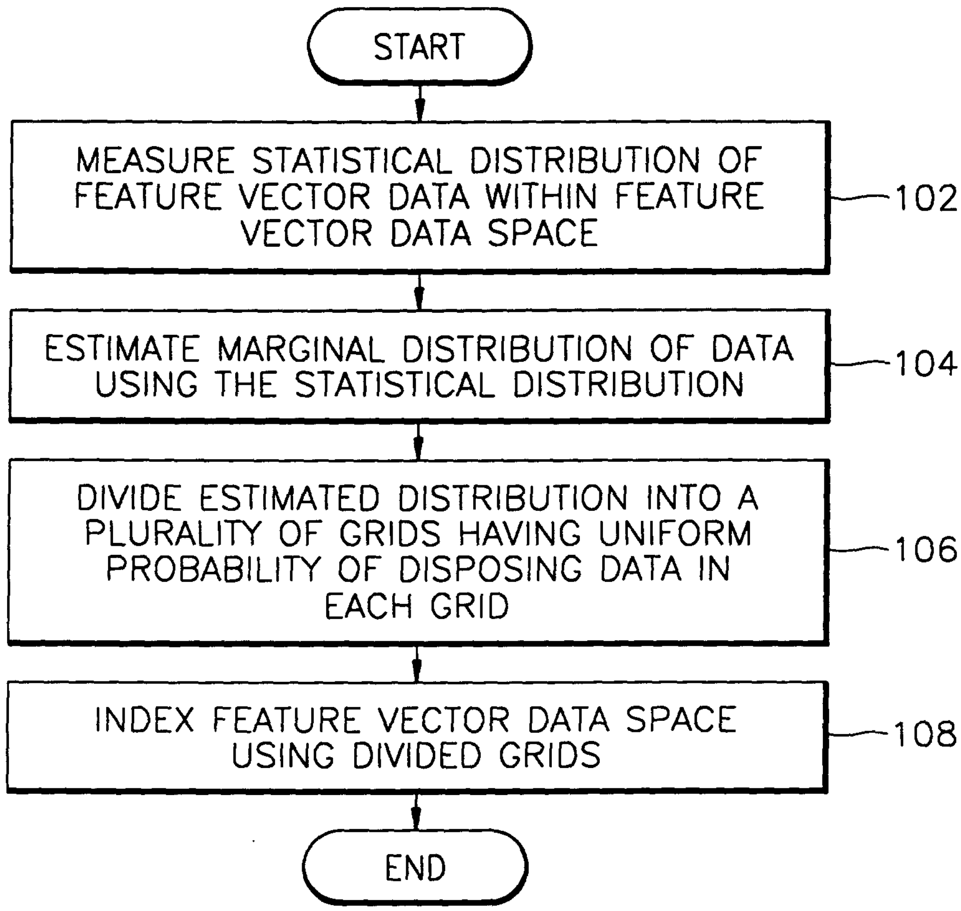
START
MEASURE STATISTICAL DISTRIBUTION OF FEATURE VECTOR DATA WITHIN FEATURE VECTOR DATA SPACE
102
ESTIMATE MARGINAL DISTRIBUTION OF DATA USING THE STATISTICAL DISTRIBUTION
104
DIVIDE ESTIMATED DISTRIBUTION INTO A PLURALITY OF GRIDS HAVING UNIFORM PROBABILITY OF DISPOSING DATA IN EACH GRID
106
INDEX FEATURE VECTOR DATA SPACE USING DIVIDED GRIDS
108
END

FIG. 2

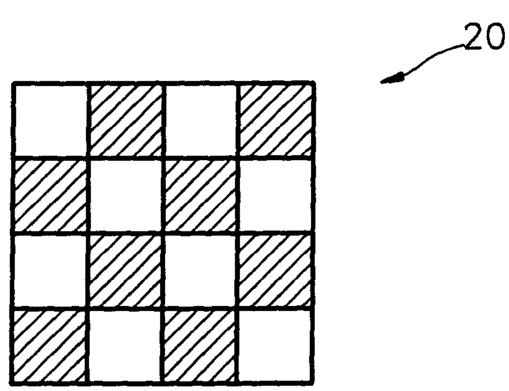
20

# FIG. 3A

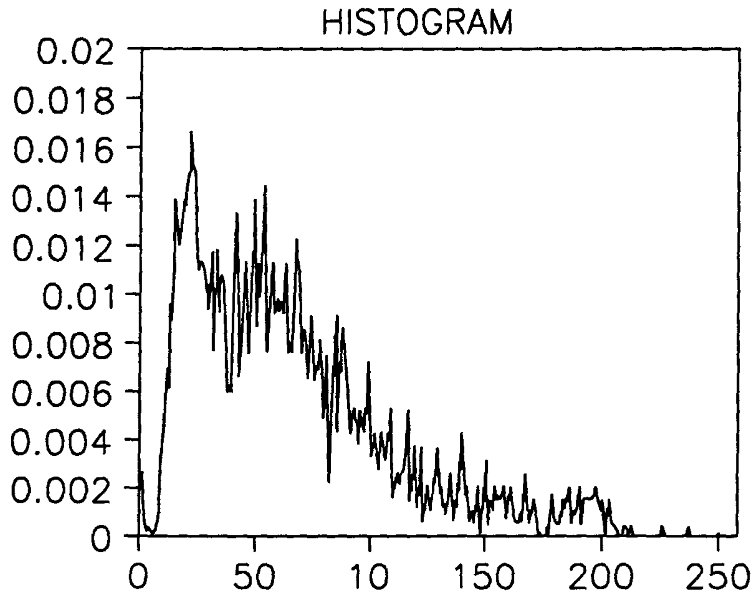
HISTOGRAM
0.02
0.018
0.016
0.014
0.012
0.01
0.008
0.006
0.004
0.002
0
0
50
10
150
200
250

# FIG. 3B

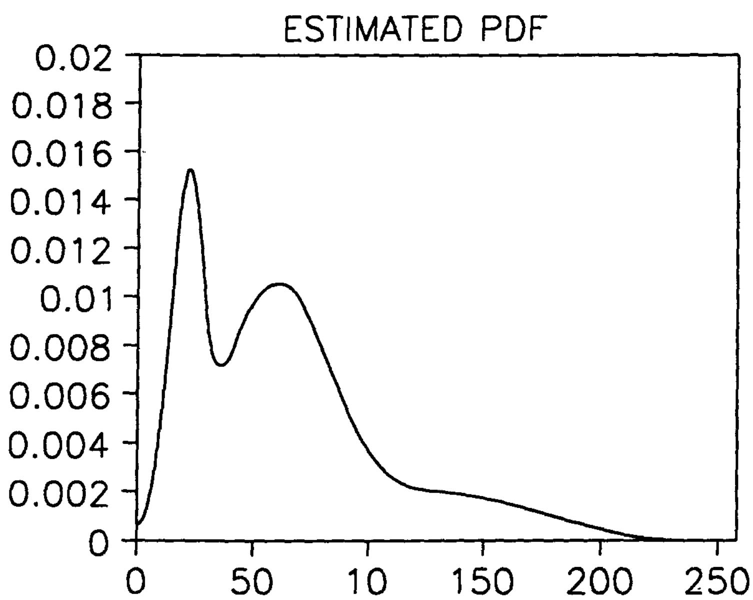
ESTIMATED PDF
0.02
0.018
0.016
0.014
0.012
0.01
0.008
0.006
0.004
0.002
0
0
50
10
150
200
250

# FIG. 4A

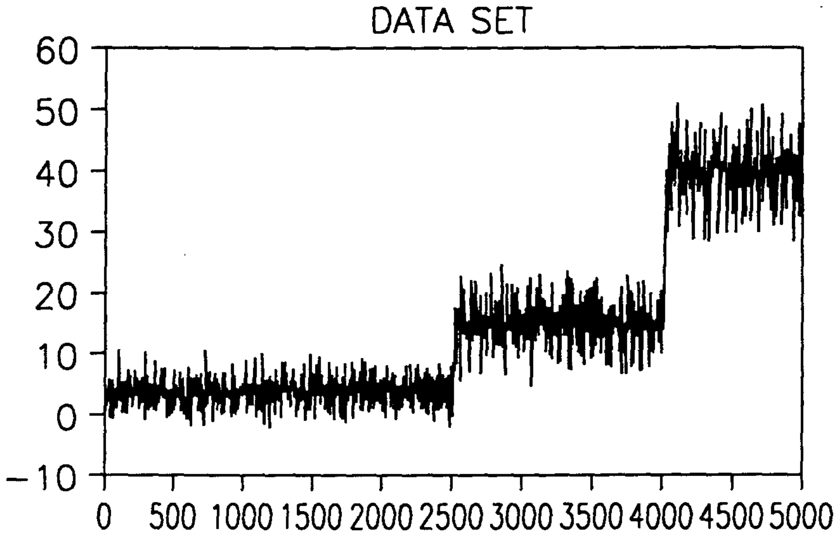
DATA SET
60
50
40
30
20
10
0
−10
0
500
1000
1500
2000
2500
3000
3500
4000
4500
5000

# FIG. 4B

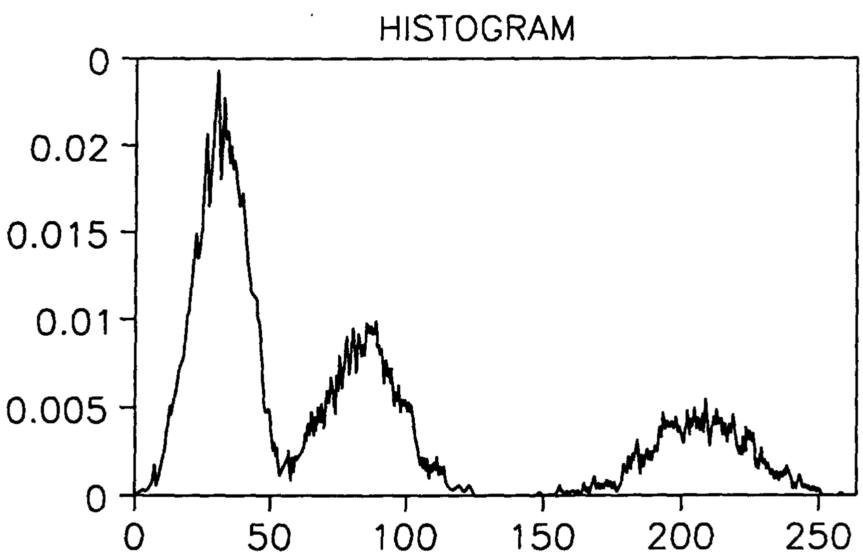
HISTOGRAM
0
0.02
0.015
0.01
0.005
0
0
50
100
150
200
250

# FIG. 4C

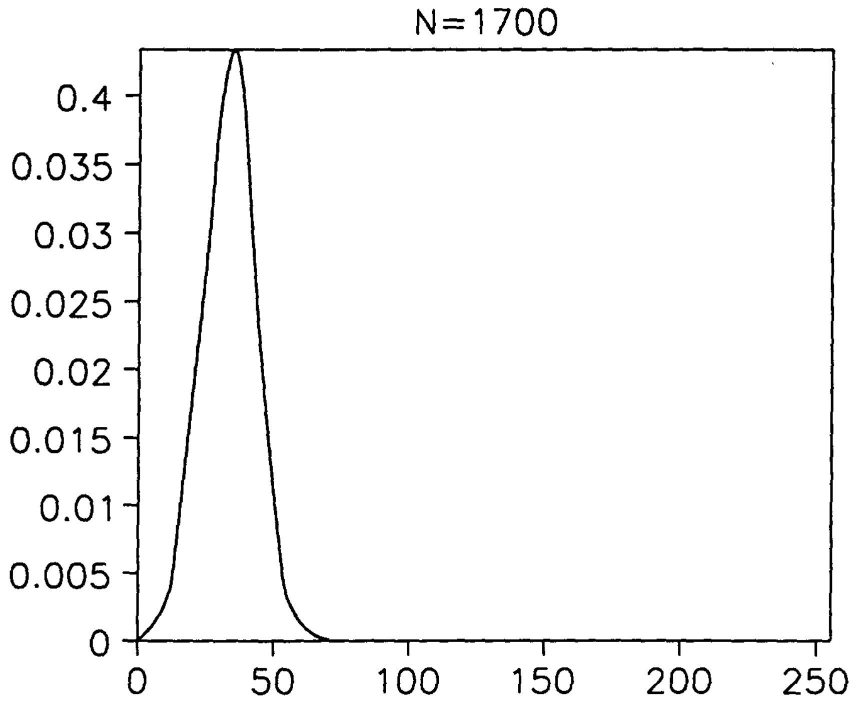
N=1700
0.4
0.035
0.03
0.025
0.02
0.015
0.01
0.005
0
0
50
100
150
200
250

# FIG. 4D

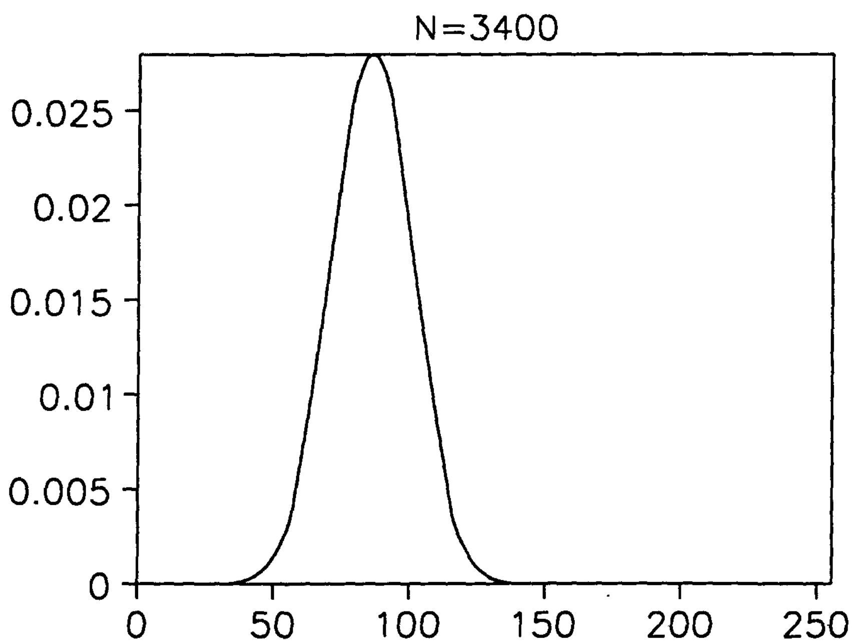
N=3400
0.025
0.02
0.015
0.01
0.005
0
0
50
100
150
200
250

# FIG. 4E

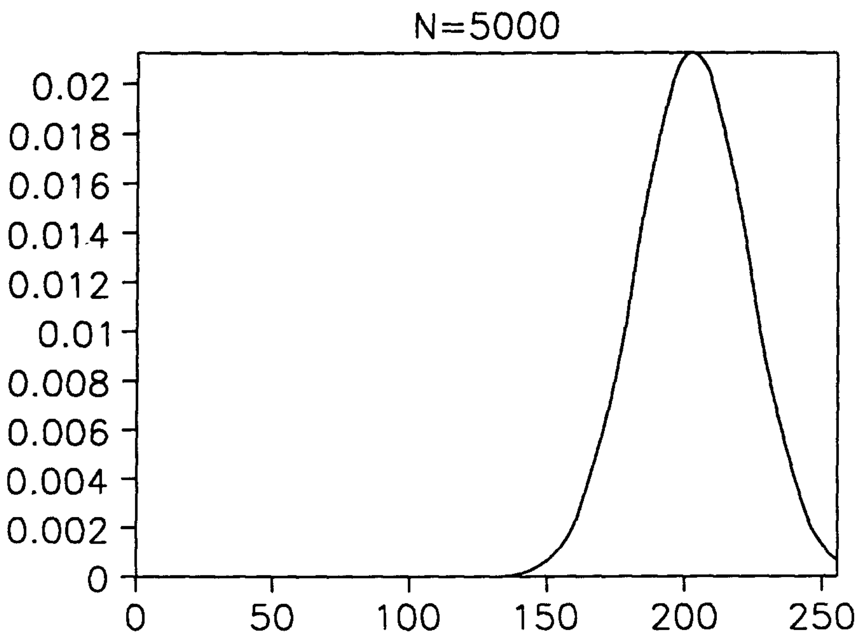
N=5000
0.02
0.018
0.016
0.014
0.012
0.01
0.008
0.006
0.004
0.002
0
0
50
100
150
200
250

FIG. 5A

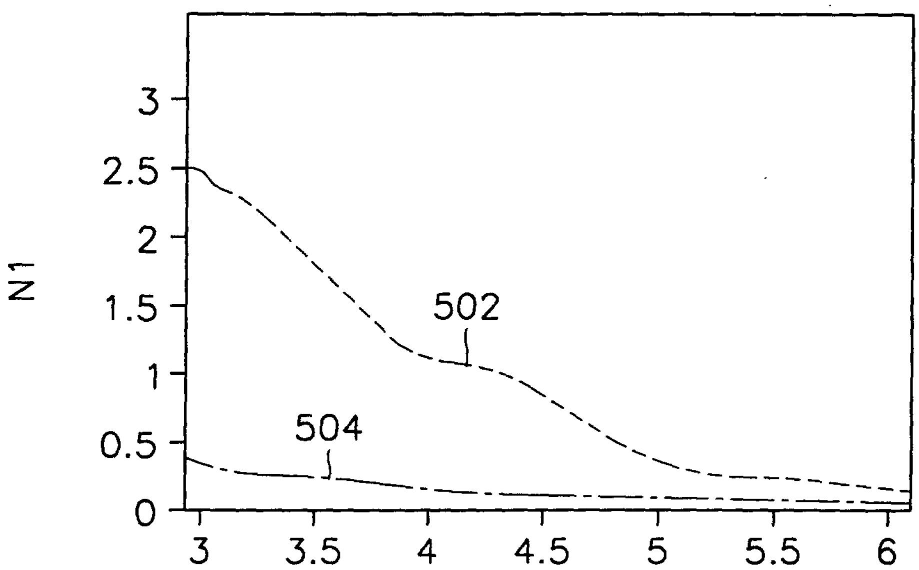
N1
3
2.5
2
1.5
1
0.5
0
3
3.5
4
4.5
5
5.5
6
502
504

FIG. 5B

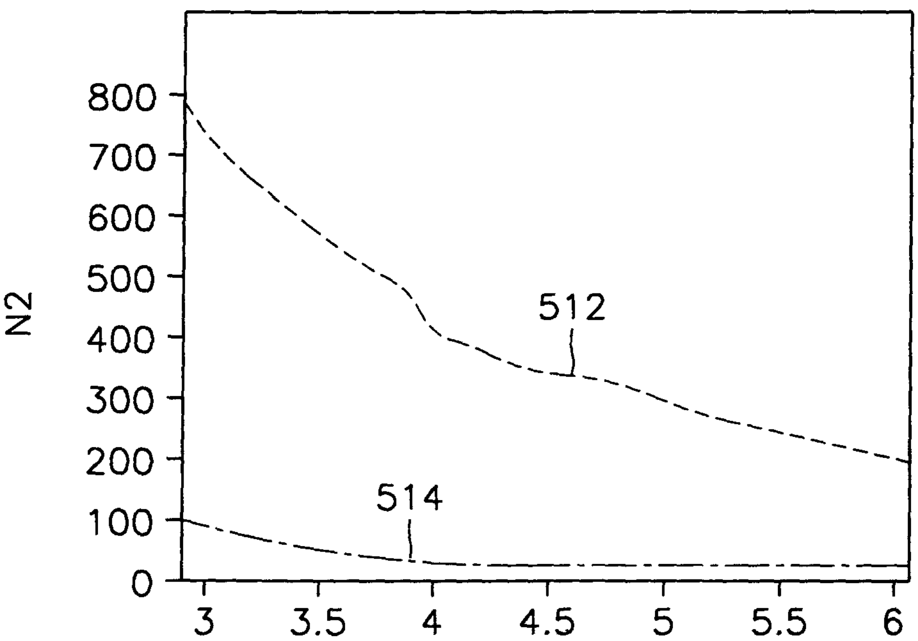
N2
800
700
600
500
400
300
200
100
0
3
3.5
4
4.5
5
5.5
6
512
514